# EUROPEAN PATENT SPECIFICATION

(11) **EP 1 573 663 B1**
(45) Date of publication and mention of the grant of the patent: **04.04.2007**
(21) Application number: 03777068.2
(22) Date of filing: 10.12.2003
(51) Int. Cl.: G06K 19/07, G06K 19/06

(54) **SMART CARD WITH NON-VOLATILE DISPLAY USING TEMPERATURE-SENSITIVE ELECTRONIC INK**
SMARTCARD MIT NICHTFLÜCHTIGER ANZEIGE AUF DER BASIS TEMPERATUREMPFINDLICHER ELEKTRONISCHER TINTE
CARTE A PUCE A AFFICHAGE REMANENT UTILISANT UNE ENCRE ELECTRONIQUE SENSIBLE A LA TEMPERATURE

(30) Priority: 12.12.2002 US 432891 P
(43) Date of publication of application: 14.09.2005
(73) Proprietor: Koninklijke Philips Electronics N.V., 5621 BA Eindhoven (NL)
(72) Inventor: PLEUNIS, John, San Jose, CA 95131 (US)
(74) Representative: Röggla, Harald
(86) International application number: PCT/IB2003/005867
(87) International publication number: WO 2004/053786

(56) References cited:
- WO-A-97/22084
- DE-A- 19 958 333
- FR-A- 2 788 359
- US-A- 2002 167 500
- US-A1- 2002 030 638
- PATENT ABSTRACTS OF JAPAN vol. 2002, no. 04, 4 August 2002 (2002-08-04) & JP 2001 338273 A (DAINIPPON PRINTING CO LTD), 7 December 2001 (2001-12-07)

## Description

This invention relates to "smart cards", also called Integrated Circuit ("IC") cards, which are small credit card like devices that may include memory and/or processing power. More particularly, this invention relates to smart cards for use in a variety of commercial applications that include selective displays of information stored thereon, and may run different applications on the same card.

Smart cards are small credit card sized devices that often include processing power and memory thereon. These cards are used to store currency amounts for later spending, access a variety of services, and keep track of various other items that relate to commercial systems in which such cards are used. Such smart cards contain limited display possibilities. Typically, for any information to be displayed on the smart card, the card must be inserted into a terminal. The terminal then extracts selected information stored on the card and displays that information to the user. Thus, for example, if the smart card represents an amount of e-money owned by a user, the user may ascertain the remaining balance by inserting the card into a terminal, whereupon the terminal will display the available balance.

It is also possible to have multiple applications stored on the same smart card. For example, the smart card may represent a calling card for making telephone calls, and also a credit card for making purchases up to a specified amount.

Often, the user may wish to know which applications are stored on the card, or specific amounts of currency that are available from the card. While it is desirable that the user be able to read various information stored on the card, it is undesirable that such information be displayed all of the time, as it could be seen by others, for example, when a purse or wallet is opened. Additionally, it is also desirable for the user to be able to see which specific applications may be stored on the card at any particular time, or other information, while also maintaining this information somewhat confidential, or at least preventing its display when the wallet or purse is opened. Further, it is desirable for the user to be able to view the information stored on the card even when there is no access to a terminal with which the card is used. Finally, it is desirable for the user to be able to verify directly on the card that the amount on the card has been increased, or decreased, to prevent fraud with terminals.

Great Britain Patent No. 2,255,934 discloses a smart card that stores data and can run various applications. However, this smart card has a liquid crystal display and therefore requires an internal power source, making it expensive and subject to failure due to draining of the battery.

United Kingdom Patent No. 2,275,654 also discloses a smart card with an on board data processor, however, the smart card requires external energy source located in the card accessing apparatus. An energy storage device on the card is charged from the terminal, and is then used to drive the display electronics when the card is removed from the terminal. Again, the high power drain of the display on the smart card means that the energy storage device may run out of power, making the data on the card unviewable without a terminal into which the card may be plugged.

Various other prior art smart cards are known to exist, however, all include one or more of the limitations discussed above, or other limitations. Examples of such prior art smart cards are disclosed in U.S. Patent Nos. 5,276,311, and 6,068,183. Documents FR-A-2 788 359 and DE-A-199 58 333 disclose cards having electronic ink displays according to the preamble of claim 1. Therefore, there exists a need in the art for a smart card that uses relatively little power, is readable independent of a terminal device, and which only displays information selectively so that confidentiality is maintained.

The above and other problems of the prior art are overcome in accordance with the present invention which relates to a smart card that utilizes an e-ink display in order to display the information desired. The amount to be displayed is "written" on the e-ink by applying a voltage across the card at the terminal. Once the display is written, it will remain showing without any further power requirements, overcoming the shortfalls of prior smart cards that require power to drive the LCD display. E-ink cartridges are commercially available from a variety of sources. Such e-ink cartridges require power to write to or alter, but will remain in the same state once power is removed. Accordingly, the inventive smart card may be written to when inserted into a terminal, but will maintain the information for display when removed from the terminal.

In one embodiment, temperature sensitive e-ink is used. Such temperature sensitive e-ink is available commercially, and can be obtained in a form and concentration such that it will not become visible until it is heated to approximately the temperature of the human body.
By utilizing such a system, the smart card can be set so that when a user's thumb is pressed on the card for the prescribed amount of time, the temperature reaches that of the thumb and the display then becomes viewable. Accordingly, when the card is in a wallet or holder, or removed briefly, confidentiality will be protected, as no data will be visible until the card is firmly grasped for a few seconds to reveal the data.

In another implementation, a transparent display that only becomes readable when a light source shines directly through it may be utilized. As with the previous embodiment, when the card is stored in its holder, the display is not readable but the card becomes readable when the user removes it from the holder or wallet and desires to display the information.
Fig. 1 shows a smart card with a narrow display indicating an amount of value remaining on the card;
Fig. 2 shows a second embodiment of the smart card showing slightly more detailed display; and
Fig. 3 depicts a functional diagram of a system in which such a smart card might be used.

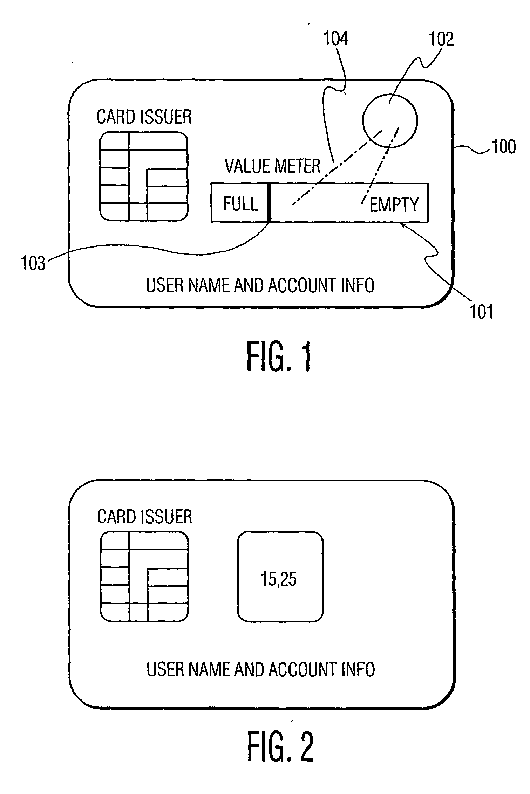

Fig. 1 shows a first embodiment of the smart card 100 including a display 101 that includes an indicator 103 for indicating an amount of value left on the card. As shown in Fig. 1, the indicator 103 can move between a full or empty position, depending upon the remaining value. An area 102 is shown which is heat sensitive and causes the indicator 103 to appear or disappear, depending upon temperature of the card. Small conductors 104 are shown in dotted outline. Such conductors may be within the surface of smart card 100 in order to transfer the heat to the temperature sensitive e-ink contained in display 101.

In operation, when a user holds their thumb over area 102 for several seconds, the card heats up to body temperature and the indicator 103 becomes visible. The heat is transferred to the display 101 via conductors 104. When the user removes the finger and places the card back into a wallet or holder, the temperature will drop and the indicator 103 will vanish.

The e-ink will not display at normal room temperature, thus causing the display to become invisible. Additionally, even in colder environments, the e-ink will not display. Only at a small range of temperatures approximately equal to 98 degrees, body temperature, will the display become visible.

Although the embodiment shown and described has the area 102 separated from the display 101, the area 102 may be coextensive with the display 101. More specifically, the user can place their thumb directly on the display, and the display may even be shaped in such a manner so that it will allow the thumb or other finger to completely cover it and transfer appropriate heat. In such a manner, the conductors 104 would be eliminated.

In order to facilitate the temperature sensitive display, e-ink must be used. The e-ink. is available on the market from (FILL IN) and can be used to fill a cartridge below the display 101 so that the ink becomes visible only upon temperature being raised. Note that the temperature increase does not actually cause the e-ink to change states or alter the data in any way. Instead, the temperature sensitivity only relates to the viewability of the information stored on the card.

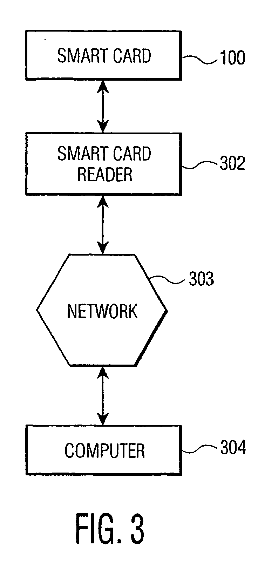

In order to change the data stored on the card, a smart card terminal is required. Fig. 3 depicts a functional block diagram of the system with which the smart card 100 interfaces. The arrangement of Fig. 3 shows the smart card 100 in combination a smart card reader 302 and a computer 304. The network 303 may be present between smart card reader 102 and computer 304, or alternatively, the smart card reader 302 may be collocated with computer 304.

In operation, the smart card 100 is inserted into the smart card reader 302. The computer 304 is an applications computer such as a purchased transaction computer or other vendor computer. Alternatively, computer 304 may in fact credit the card with additional amounts in response to requests from the user and payment. In either event, when the smart card 100 is within the smart card reader 302, the computer 304 may increase or decrease the amount of available credit on the smart card.

In accordance with the invention, the e-ink utilized on the smart card does not require energy to maintain its state. Only a change of state requires energy. Accordingly, a voltage is applied across the smart card at a position such that an indicator line is drawn at the appropriate position to indicate the correct value remaining on the card. Once the appropriate voltage is applied across the smart card to draw a line in the e-ink. at the appropriate position, the line will remain there and be selectively viewable upon heat being applied to the card.

Figure 2 is an alternative embodiment of the invention wherein the display is shown in a slightly different form. Rather than an indicator line, a full numerical display may be utilized as well. The numerical display may also operate utilizing e-ink and other techniques described herein.

While the above describes the preferred embodiment of the invention, various modifications or additions will be apparent to those of skill in the art within the scope of the appended claims.

## Claims

1. A card like device having an electronic ink display for displaying information, wherein said information is only alterable upon combining said device with a terminal designed to alter said information,
**characterized in that**,
said electronic ink display is temperature sensitive in such a kind that said information is viewable only when said display has a certain temperature, which temperature is substantially above room temperature.

2. The card like device of claim 1 wherein the certain temperature is substantially 36.7 degrees Celsius (98 degrees Fahrenheit).

3. The card like device of claim 2 wherein the display is connected to an area by conductors, and wherein body heat from said area is transferred via said conductors to said display to cause information on said display to become viewable.

4. The card like device of claim 2 wherein a heat sensitive area that causes information on said display to become viewable is coextensive with said display.

5. A method of displaying and altering information on an electronic ink display of a card like device, the method comprising the steps of
utilizing a powered terminal to alter said information
**characterized in**
utilizing a heat source to heat up said display to a temperature substantially above room temperature,
and **in that**
said electronic ink display is temperature sensitive in such a kind that said temperature rise causes said altered information to be viewable on said display.

6. The method of claim 5 wherein the heat source is a human finger, and the display is arranged to cause the information to be viewable when the display temperature reaches substantially body temperature.

## Patentansprüche

1. Kartenähnliche Vorrichtung mit einer elektronischen Tintenanzeige für das Anzeigen von Informationen, wobei die Informationen nur veränderbar sind, wenn die Vorrichtung mit einem Terminal kombiniert wird, der dafür ausgelegt ist, die Informationen zu verändern,
**dadurch gekennzeichnet, dass**
die elektronische Tintenanzeige dergestalt temperaturempfindlich ist, dass die Informationen nur sichtbar sind, wenn die Anzeige eine bestimmte Temperatur aufweist, wobei die Temperatur wesentlich oberhalb der Raumtemperatur liegt.

2. Kartenähnliche Vorrichtung nach Anspruch 1, **dadurch gekennzeichnet, dass** diese Temperatur im Wesentlichen 36,7 Grad Celsius (98 Grad Fahrenheit) beträgt.

3. Kartenähnliche Vorrichtung nach Anspruch 2, **dadurch gekennzeichnet, dass** die Anzeige mit Hilfe von Leitern mit einem Bereich verbunden ist, wobei die Körperwärme von diesem Bereich über diese Leiter zu der Anzeige übertragen wird, um zu bewirken, dass die Informationen auf der Anzeige sichtbar gemacht werden.

4. Kartenähnliche Vorrichtung nach Anspruch 2, **dadurch gekennzeichnet, dass** ein wärmeempfindlicher Bereich, welcher bewirkt, dass die Informationen auf der Anzeige sichtbar werden, mit der Anzeige koextensiv ist.

5. Verfahren für das Anzeigen und das Ändern von Informationen auf einer elektronischen Tintenanzeige einer kartenähnlichen Vorrichtung, wobei das Verfahren die folgenden Schritte umfasst:
Nutzung eines angetriebenen Terminals für die Änderung der Informationen,
**gekennzeichnet dadurch, dass** eine Wärmequelle verwendet wird, um die Anzeige auf eine Temperatur im Wesentlichen oberhalb der Raumtemperatur zu erwärmen,
und wobei
die elektronische Tintenanzeige dergestalt temperaturempfindlich ist, dass der Temperaturanstieg bewirkt, dass die geänderten Informationen auf der Anzeige sichtbar sind.

6. Verfahren nach Anspruch 5, **dadurch gekennzeichnet, dass** die Wärmequelle ein menschlicher Finger ist und die Anzeige so angeordnet ist, dass die Informationen sichtbar gemacht werden, wenn die Anzeigetemperatur im Wesentlichen die Körpertemperatur erreicht.

## Revendications

1. Dispositif de type carte comportant un écran à encre électronique pour afficher des informations, dans lequel lesdites informations ne sont modifiables qu'en combinant ledit dispositif avec un terminal conçu pour modifier lesdites informations,
**caractérisé en ce que**
ledit écran à encre électronique est sensible à la température, de telle sorte que lesdites informations ne sont visualisables que lorsque ledit écran atteint une certaine température, laquelle température est sensiblement au-dessus de la température ambiante.

2. Dispositif de type carte selon la revendication 1, dans lequel la certaine température est sensiblement de 36,7 degrés Celsius (98 degrés Fahrenheit).

3. Dispositif de type carte selon la revendication 2, dans lequel l'écran est raccordé à une surface par des conducteurs, et dans lequel la chaleur corporelle à partir de ladite surface est transférée par lesdits conducteurs audit écran pour que les informations sur ledit écran deviennent visualisables.

4. Dispositif de type carte selon la revendication 2, dans lequel une surface sensible à la chaleur qui permet la visualisation des informations sur ledit écran est coextensive audit écran.

5. Procédé pour afficher et modifier des informations sur un écran à encre électronique d'un dispositif de type carte, le procédé comprenant les étapes consistant à :
utiliser un terminal sous tension pour modifier lesdites informations, **caractérisé en ce que**
on utilise une source de chaleur pour élever la température dudit écran jusqu'à une température sensiblement au-dessus de la température ambiante, et **en ce que**
ledit écran à encre électronique est sensible à la température, de telle sorte que ladite augmentation de température provoque que les informations modifiées sont visualisables sur ledit écran.

6. Procédé selon la revendication 5, dans lequel la source de chaleur est un doigt humain et l'écran est disposé pour que les informations soient visualisables lorsque la température de l'écran atteint sensiblement la température corporelle.
